(19) Europäisches Patentamt
European Patent Office
Office européen des brevets

(11) **EP 3 396 999 B1**

(12) **EUROPEAN PATENT SPECIFICATION**

(45) Date of publication and mention
of the grant of the patent:
**04.10.2023 Bulletin 2023/40**

(21) Application number: **18156350.3**

(22) Date of filing: **06.08.2010**

(51) International Patent Classification (IPC):
**H04W 24/10** *(2009.01)* **H04W 72/04** *(2023.01)*
**H04L 5/00** *(2006.01)* **H04W 24/02** *(2009.01)*
**H04W 48/08** *(2009.01)* **H04W 48/16** *(2009.01)*
**H04W 4/08** *(2009.01)*

(52) Cooperative Patent Classification (CPC):
**H04L 5/005;** H04L 5/0035; H04L 5/0064;
H04L 5/0092; H04W 4/08; H04W 24/02;
H04W 48/08; H04W 48/16

(54) **METHOD, DEVICE AND USER EQUIPMENT FOR CONFIGURING REFERENCE SIGNAL**

VERFAHREN, VORRICHTUNG UND BENUTZERGERÄT ZUR KONFIGURATION EINES
REFERENZSIGNALS

PROCÉDÉ, DISPOSITIF ET ÉQUIPEMENT UTILISATEUR DE CONFIGURATION DE SIGNAL DE
RÉFÉRENCE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **07.08.2009 CN 200910091107
28.10.2009 CN 200910208770**

(43) Date of publication of application:
**31.10.2018 Bulletin 2018/44**

(62) Document number(s) of the earlier application(s) in
accordance with Art. 76 EPC:
**10806052.6 / 2 464 163**

(73) Proprietor: **Huawei Technologies Co., Ltd.
Longgang District
Shenzhen
Guangdong 518129 (CN)**

(72) Inventors:
• **ZHOU, Mingyu
Shenzhen, Guangdong 518129 (CN)**
• **LIU, Kunpeng
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**EP-A2- 2 452 474**

• **HUAWEI: "Considerations on the Uplink
Reference Signal for CoMP", 3GPP DRAFT;
R1-091267 CONSIDERATIONS ON THE UPLINK
REFERENCE SIGNAL FOR COMP, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, no. Seoul, Korea; 20090317,
17 March 2009 (2009-03-17), XP050338875,**
• **NOKIA SIEMENS NETWORKS ET AL: "Uplink DM
RS from CoMP viewpoint", 3GPP DRAFT;
R1-091760, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no. San
Francisco, USA; 20090428, 28 April 2009
(2009-04-28), XP050339285,**
• **PANASONIC: "Discussion on PUCCH
coordination for UL CoMP", 3GPP DRAFT;
R1-091165, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, no.
Seoul, Korea; 20090317, 17 March 2009
(2009-03-17), XP050338786,**

- **MOTOROLA: "Uplink DM RS PUSCH Sequence-shift Pattern", 3GPP DRAFT; DRAFT CR ON UL DM RS PUSCH SEQUENCE-SHIFT PATTERN 36.211-830, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080630, 25 June 2008 (2008-06-25), XP050417708,**
- **CATT ET AL: "Analysis of SRS scheme for CoMP", 3GPP DRAFT; R1-092776, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090624, 24 June 2009 (2009-06-24), XP050351232,**

# Description

## FIELD OF THE INVENTION

The present invention relates to the field of communications technologies, and in particular, to a method by a base station, a method by a user equipment, a device associated with a base station, a user equipment and a computer program product for configuring a reference signal.

## BACKGROUND OF THE INVENTION

In a conventional communications system, a reference signal (Reference Signal, RS for short) is generally formed by performing modulation with a certain sequence actually known by a sender and a receiver. After the sender sends the reference signal, the receiver receives according to the actually known sequence, so as to obtain channel situation in a corresponding time period, at a corresponding frequency, or on corresponding antenna resources. By taking a sounding reference signal (Sounding Reference Signal, SRS for short) of a UE as an example, an evolved Node B (evolved Node B, eNB) may schedule one or more cells. In order to enable the eNB to perform uplink scheduling reasonably, the eNB needs to obtain uplink broadband channel information of the user equipment (User Equipment, UE for short), and the uplink broadband channel information needs to be acquired through the SRS of the UE. Specifically, the eNB schedules a resource of the SRS for the user equipment UE, the UE sends the SRS through the resource, and the eNB performs detection after receiving the SRS sent by the UE, so as to obtain the uplink broadband channel information. Generally, the UE is served by only one cell, and the eNB may enable the SRS of the UE in the cell to be orthogonal to SRSs of other UEs in this cell through scheduling, thereby ensuring preferable detecting performance of the SRS.

In a future communications system, a coordinated multi-point (Coordinated Multi-Point, CoMP for short) transmission technology is introduced, so that the UE may be served by multiple cells, and in a CoMP system, the UE capable of being served by multiple cells is referred to as a (CoMP UE, UEm). On uplink, a signal sent by the UEm may be received by detectors of multiple cells, so that the signal transmitted through uplink may acquire diversity gains among the multiple cells, thereby improving the system performance.

During the implementation of the present invention, the inventor finds that, the prior art has not proposed how to configure an RS for the CoMP UE in the CoMP system, so the prior art cannot reduce interference generated by the RS between the UEms in the CoMP system.

Document "Considerations on the Uplink Reference Signal for CoMP", 3GPP TSG RAN WG1, R1-091267 discloses considerations on the uplink reference signal for CoMP, wherein, supposing UE1 is registered to Cell B, and UE1 is a UL CoMP user, its active CoMP set is Cell B and Cell C, i.e. the signal from UE1 can be received by Cell B and Cell C. The Cell B and Cell C construct an active CoMP set . In order to support CoMP MU-MIMO, Cell B and Cell C may share the orthogonal PUSCH RS resource. For Cell C itself, the MU-MIMO involving CoMP users and Non-CoMP users should also be supported. The scheduler of Cell C may allocate the same time-frequency resource to UE2 which is not a UL CoMP user. This may lead to the PUSCH RS collision between UE1 and UE2 in Cell C. To make sure the demodulation performance, one rational way is to keep the cross correlation of the PUSCH DMRS of UE1 and UE2 very low to improve the channel estimation, the PUSCH DM RS for CoMP user and Non-CoMP user is orthogonal to each other. No multi-user interference will be introduced into the channel estimation. This scheme could get the best performance of UL CoMP.

Document "Uplink DM RS from CoMP viewpoint", 3GPP TSG RAN WG1, R1-091760 discloses an Uplink DM RS from CoMP viewpoint, wherein a CoMP specific DM RS mode is introduced. Normal/CoMP DM RS mode is configurable per UE to separate CoMP and non-CoMP UEs. CoMP DM RS mode uses one sequence group from the sequence groups allocated to the UL CoMP set cells. A cover code can be applied over the two DM RS symbols in CoMP mode, thus, orthogonalising DM RS between CoMP and non-CoMP UEs using the same sequence group.

Document "Discussion on PUCCH coordination for UL CoMP", 3GPP TSG RAN WG1, R1-091165 discloses PUCCH transmission schemes for CoMP, wherein the initial physical resource used for PUCCH transmission is linked to the first CCE index used for PDCCH for dynamic-ACK, or explicitly signaled via higher layer for persistent-ACK/CQI. The symbol-based cyclic shift hopping pattern is determined by the cell-id and the slot number within a radio frame.

Document "Uplink DM RS PUSCH Sequence-shift Pattern", 3GPP TSG RAN WG1, R1-082331 discloses an issue about group hopping, wherein The sequence-group number $u$ in slot $n_s$ is defined by a group hopping pattern $f_{gh}(n_s)$ and a sequence-shift pattern $f_{ss}$ according to

$$u = \left(f_{gh}(n_s) + f_{ss}\right) \mathrm{mod}\, 30$$

There are 17 different hopping patterns and 30 different sequence-shift patterns. Sequence-group hopping can be enabled or disabled by higher layers. PUCCH and PUSCH have the same hopping pattern but may have different sequence-shift patterns.

Document "Analysis of SRS scheme for CoMP", 3GPP TSG RAN WG1, R1-092776 discloses an SRS scheme for CoMP, wherein both UE 1 and UE 2 are served by Cell 1 and Cell 2, with Cell 1 and Cell 2 being the serving cell for UE 1 and UE 2, respectively. Further, assume both UEs employ Rel-8 SRS as the feedback mechanism. In other words, the SRS resource allocation for each UE is solely determined by its serving cell. Note that different SRS root sequences may be used by UE 1 and UE 2.

## SUMMARY OF THE INVENTION

Embodiments of the present invention aim to provide a method by a base station, a method by a user equipment, a device associated with a base station, a user equipment and a computer program product for configuring a reference signal, so as to realize the configuration of RSs for UEms, and avoid interference generated by RSs of the UEms.

An embodiment of the present invention provides a method for configuring a reference signal according to appended claim 1.

An embodiment of the present invention further provides a method for configuring a reference signal according to appended claim 6.

An embodiment of the present invention further provides a device for configuring a reference signal according to appended claim 7.

An embodiment of the present invention further provides a user equipment according to appended claim 11.

## BRIEF DESCRIPTION OF THE DRAWINGS

In order to illustrate the technical solutions in the embodiments of the present invention or in the prior art more clearly, the accompanying drawings required to be used in the description of the embodiment or the prior art are briefly introduced in the following. It is obvious that the accompanying drawings to be described are only a part of the embodiments of the present invention. Other accompanying drawings may further be obtained by persons of ordinary skill in the art according to these accompanying drawings without creative efforts.

FIG. 1 is a schematic structure diagram of a CoMP system;
FIG. 2 is a schematic flow chart of a method for configuring a reference signal;
FIG. 3 is a schematic flow chart of a method for configuring a reference signal;
FIG. 4 is a schematic flow chart of another method for configuring a reference signal;
FIG. 5 is a schematic flow chart of yet another method for configuring a reference signal;
FIG. 6 is a schematic structure diagram of a device for configuring a reference signal;
FIG. 7 is a schematic structure diagram of another device for configuring a reference signal;
FIG. 8 is a schematic structure diagram of a user equipment;
FIG. 9 is a schematic structure diagram of another user equipment;
FIG. 10 is a schematic structure diagram of a system for configuring a reference signal; and
FIG. 11 is a schematic structure diagram of another system for configuring a reference signal.

## DETAILED DESCRIPTION OF THE EMBODIMENTS

The reference signal may be a signal modulated through a sequence, for example, a demodulation reference signal or a sounding reference signal. The demodulation reference signal may be used to demodulate data, and the sounding reference signal may be used to sound channel information.

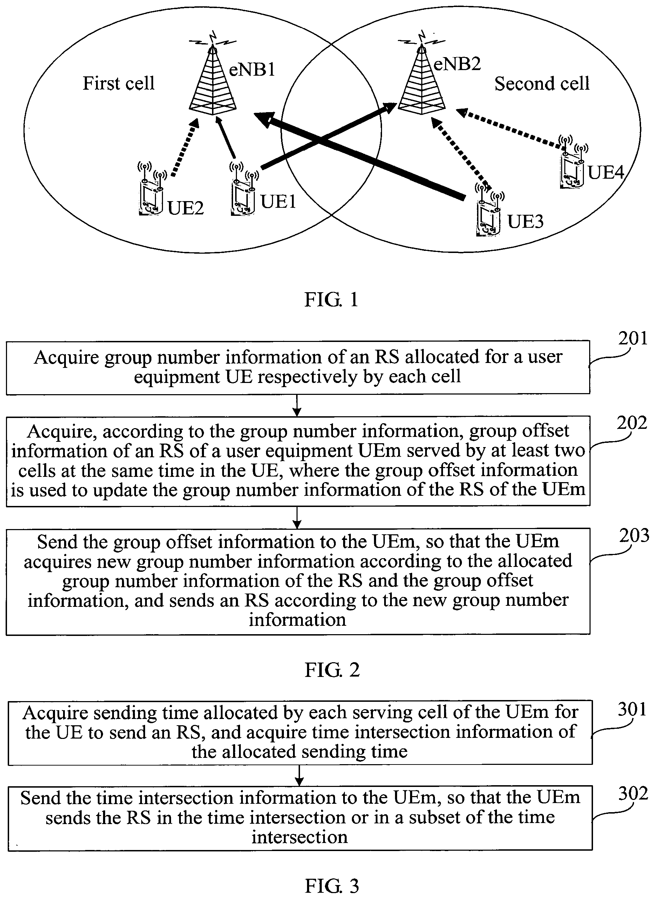

FIG. 1 is a schematic structure diagram of a CoMP system. As shown in FIG. 1, a UE1 in a first cell and a UE3 in a second cell may be provided with services by an eNB 1 and an eNB2 at the same time, and belong to CoMP UEs (UEm) in the CoMP system. A UE2 in the first cell can only be provided with services by the eNB1, and a UE4 in the second cell can only be provided with services by the eNB2, and therefore, the UE2 and the UE4 belong to common UEs. In the first cell, through scheduling, the eNB1 may prevent an RS of the UE1 from being interfered by the UE2 in the first cell. In the second cell, if a part of or all resources of the RS used by the UE1 are occupied by the UE3 and the UE4 in the second cell, the eNB2 may be interfered when detecting the RS of the UE1, so that the eNB2 cannot obtain preferable detecting performance. The CoMP system shown in FIG. 1 is only a description, and the number of cells in the CoMP system in the embodiment of the present invention is not limited to the situation that is shown in FIG. 1 where totally two cells, that is, the first cell and the second cell, exist. The number of the first cell and the second cell in the embodiment of the present invention may be several according to actual situations, and the first cell and the second cell may be controlled by one eNB, or respectively controlled by two eNBs.

"Group number information" mentioned in the embodiments of the present invention below may specifically refer to a group number of a group where a sequence adopted by the RS locates. For example, the RS adopts constant amplitude zero auto correlation (Constant Amplitude Zero Auto Correlation, CAZAC for short) sequences, and M CAZAC sequences are divided into N groups (M is a number of all available CAZAC sequences, and N may be the number of the cells); and N group numbers exist in the N groups of CAZAC sequences. Based on attributes of the CAZAC sequence groups, UEs under the same cell use corresponding CAZAC sequences having the same length and under the same group number, and different UEs may perform different circulation shifts on the CAZAC sequence. Since the CAZAC sequences having the same length and under the same group number are orthogonal to one another after being subject to circulation shifts of different steps, the RS interference between different UEs under the same cell may be reduced.

In addition, in order to make the embodiments of the present invention more comprehensible, the group offset information is illustrated in detail with reference to FIG. 1 as follows.

As shown in FIG. 1, the first cell serves the UE2 and the UE1, and the second cell serves the UE3 and the UE4, and in addition, the first cell and the second cell serve the UE1 and the UE3 at the same time, and the UE1 and the UE3 may be CoMP UEs. The first cell and the second cell have different identities (ID), so a group number u1 of the first cell is different from a group number u2 of the second cell. In order to avoid interference generated by a UEm (UE3) in the second cell on a scheduled UEm (UE1) in the first cell when the UEm (UE1) in the first cell is scheduled, the UEms (UE1, UE3) in the first cell and in the second cell need to have the same group number. Specifically, the following three manners may be used to enable all UEms in the first cell and the second cell to update respective group numbers, and enable the group numbers of the UEms to be the same. First, by taking the first cell as a reference, form a new group number for the UEm in the second cell by setting an offset for the group number of the second cell, and the new group number is the same as the group number of the UEm in the first cell, that is, u1=Δ+u2, the new group number is formed by adding Δ to the group number of the UEm in the second cell. Second, by taking the second cell as a reference, form a new group number for the UEm in the first cells by setting an offset for the group number of the first cell, and the new group number is the same as the group number of the UEm in the second cell, that is, u2=Δ+u1, the new group number is formed by adding Δ to the group number of the UEm in the second cell. Third, after setting an offset for the group number of the fist cell and the group number of the second cell, a new group number of the first cell and a new group number of the second cell are enabled to be the same, that is, u1+Δ1=u2+Δ2. Through the three manners, it may be realized that the UEm in the first cell and the UEm in the second cell form new group number information. The foregoing example only takes the UEm in the first cell being the UE1 and the UEm in the second cell being the UE3 as an example. However, the cells in the embodiment of the present invention are not limited to be two cells, and a UEm under multiple cells may be set during specific implementation, and the number of the UEm in each cell is not limited to be one, and multiple UEms may be set during specific implementation according to actual situations.

In addition, a primary cell mentioned in the following embodiments of the present invention may be a serving cell having one function or all functions as follows: determining a parameter of uplink transmission of the UE, sending a signaling to the UE, and/or cooperatively processing an uplink signal of the UE. Other cells serving the UE are referred to as auxiliary cells of the UE.

FIG. 2 is a schematic flow chart of an embodiment of a method for configuring a reference signal of the present invention. As shown in FIG. 2, this embodiment includes the following steps:

Step 201: Acquire group number information of an RS allocated for a user equipment UE respectively by each cell;

Step 202: Acquire, according to the group number information, group offset information of an RS of a user equipment UEm served by at least two cells at the same time in the UE, where the group offset information is used to update the group number information of the RS of the UEm; and

Step 203: Send the group offset information to the UEm, so that the UEm acquires new group number information according to the allocated group number information of the RS and the group offset information, and sends an RS according to the new group number information.

In the method for configuring a reference signal provided in the embodiment of the present invention, group number information of an RS allocated for a UE respectively by each cell is acquired; group offset information of the RS in the UE is acquired according to the group number information; and the group offset information is sent to a UEm, so that the UEm acquires new group number information according to the allocated group number information of the RS and the group offset information, and sends an RS according to the new group number information, thereby avoiding interference generated between the UEms in the cells on when an eNB schedules the UEm.

Further, on the basis of the embodiment shown in FIG. 2, the step 203 further includes:

The group offset information is group offset enabling information, the group offset enabling information is set to the corresponding UEm in each cell, so that after receiving the group offset enabling information, the UEm acquires new group number information according to a sum of or a difference between the allocated group number information of the RS and the preset group offset, so that different UEms have the same group number information of the RS. Specifically, the group offset enabling information may be sent to the UEm in each cell in advance through a downlink signaling. For example, the UEm may be notified of the group offset information used by a physical uplink share channel (Physical Uplink Share Channel, PUSCH for short) through the downlink signaling. The group offset enabling information may be notified to the UEm in each cell only through a signaling of 1 bit, thereby saving the signaling overhead. Moreover, the UEm in each cell acquires the same group number information of the RS according to the group offset enabling information, thereby avoiding the interference generated by the UE in each cell on a scheduled UEm when an eNB schedules the UEm.

Specifically, when a group number corresponding to the group number information obtained through the foregoing manner is greater than a group number N or smaller than 0, a modulus of N may be obtained for the group number corresponding to the group number information, thereby obtaining an available new group number.

Further, on the basis of the method shown in FIG. 2, the embodiment further includes:

configuring an emission parameter of the RS of the UE under each cell, so that the UEm and the UE that only is served by the primary cell of the UEm send the RSs at different time points; or
configuring an emission parameter of the RS of the UE under each cell, so that the UEm and the UE that only is served by the primary cell of the UEm send the RSs at different combs.

Further, on the basis of FIG. 2, the method further includes:

acquiring sending time allocated by each cell providing services for the UEm for the UE to send an RS, and acquiring time intersection information of the allocated sending time; and
sending the time intersection information to the UEm, so that the UEm sends the RS in the time intersection or in a subset of the time intersection. Alternatively, information of one or more subsets of the time intersection may be sent only.

Further, on the basis of FIG. 2, the method further includes:

acquiring total sounding bandwidth allocated by each cell providing services for the UEm for the UE to send an RS, and acquiring intersection information of the allocated total sounding bandwidth; and
sending the intersection information of the total sounding bandwidth to the UEm, so that the UEm sends the RS in the intersection of the total sounding bandwidth or a subset of the intersection of the total sounding bandwidth. Alternatively, information of one or more subsets of the intersection of the total sounding bandwidth may be sent only. Optionally, the RS here may specifically refer to an SRS.

The UEm sends the RS in the intersection of the total sounding bandwidth or in the subset of the intersection of the total sounding bandwidth, so as to avoid interference caused by the RS of the UEm on other UEs of the auxiliary cell since the total sounding bandwidth of the UEm is greater than the total sounding bandwidth of the auxiliary cell.

Further, on the basis of the embodiment shown in FIG. 2, when each cell is respectively controlled by a different eNB, the embodiment further includes: sharing, by different eNBs, emission parameters of the RSs allocated by the respective cells, where the emission parameter of the RS at least includes the allocated group number information, or the group offset information of the RS of the UEm. Different eNBs share the emission parameters of the RSs allocated by the respective cells.

FIG. 3 is a schematic flow chart of another method for configuring a reference signal. As shown in FIG. 3, this method includes the following steps:

Step 301: Acquire sending time allocated by each serving cell of the UEm for the UE to send an RS, and acquire time intersection information of the allocated sending time; and
Step 302: Send the time intersection information to the UEm, so that the UEm sends the RS in the time intersection or in a subset of the time intersection. Alternatively, information of one or more subsets of the time intersection may be sent only.

In a method for configuring the reference signal, the sending time allocated by each serving cell for the UE to send the RS is acquired, and the time intersection information of the allocated sending time is acquired, so that the UEm sends the RS in the time intersection or in a subset of the time intersection, thereby avoiding the interference generated by the UE in each cell on a scheduled UEm when an eNB schedules the UEm.

Specifically, if the RS transmission time of the UEm of the primary cell is transmitting every transmission time interval (Transmission Time Interval, TTI for short), the RS total sounding bandwidth of the UEm in the auxiliary cell is transmitting every 2 TTIs; the time intersection of the UEm in the primary cell and the UEm in the auxiliary cell is every 2 TTIs; and a subset of every 2 TTIs may be every 4 TTIs. Therefore, the RS transmission time of the UEm in the primary cell and the UEm in the auxiliary cell may be transmitting every 2 TTIs or every 4 TTIs.

Further, on the basis of the method shown in FIG. 3, the method further includes:

acquiring total sounding bandwidth allocated by each cell providing services for the UEm for the UE to send an RS, and acquiring total sounding bandwidth intersection information of the allocated total sounding bandwidth; and
sending the total sounding bandwidth intersection information to the UEm, so that the UEm sends the RS in the total sounding bandwidth intersection or a subset of the total sounding bandwidth intersection. Alternatively, information of one or more subsets of the intersection of the total sounding bandwidth may be sent only.

The UEm sends the RS in the total sounding bandwidth intersection or in the subset of the total sounding bandwidth intersection, so as to avoid interference caused by the RS of the UEm on other UEs of the auxiliary cell since the total sounding bandwidth of the UEm is greater than the total sounding bandwidth of the auxiliary cell. Optionally, the RS here may specifically refer to an SRS.

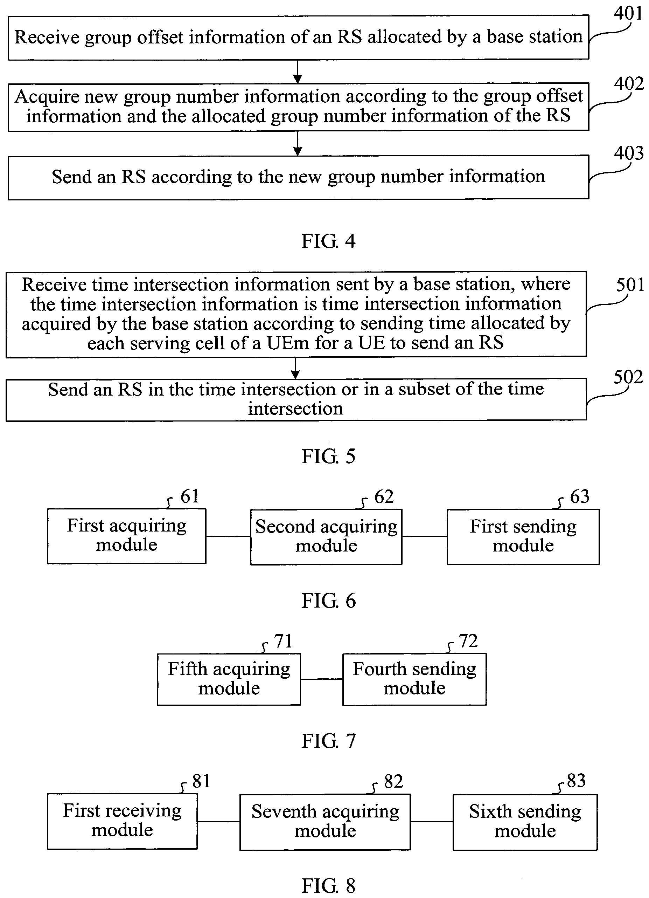

FIG. 4 is a schematic flow chart of still another embodiment of a method for configuring a reference signal. As shown in FIG. 4, this embodiment includes the following steps:

Step 401: Receive group offset information of an RS allocated by a base station;
Step 402: Acquire new group number information according to the group offset information and the allocated group number information of the RS; and
Step 403: Send an RS according to the new group number information.

In the method for configuring a reference signal provided in the embodiment of the present invention, the group offset information of the RS allocated by the base station is received; new group number information is acquired according to the group offset information and the allocated group number information of the RS; and an RS is sent according to the new group number information, thereby avoiding the interference generated by the UE in each cell on a scheduled UEm when an eNB schedules the UEm.

Further, on the basis of the embodiment shown in FIG. 4, the step 402 specifically includes:
the group offset information is group offset enabling information, after receiving the group offset enabling information, acquiring, by the UEm, new group number information according to a sum of or a difference between the allocated group number information of the RS and a preset group offset, so that the new group number information is the same as the group number information of another UEm.

Further, on the basis of the embodiment shown in FIG. 4, the step 403 may specifically include:

sending the RS at a time point different from a UE only served by a primary cell thereof according to a configured emission parameter of the RS; or
sending the RS at a comb different from a UE only served by a primary cell thereof according to a configured emission parameter of the RS.

FIG. 5 is a schematic flow chart of yet another method for configuring a reference signal. As shown in FIG. 5, this embodiment includes the following steps:

Step 501: Receive time intersection information sent by a base station, where the time intersection information is time intersection information acquired by the base station according to sending time allocated by each serving cell of a UEm for a UE to send an RS; and
Step 502: Send an RS in the time intersection or in a subset of the time intersection.

In this method for configuring a reference, the time intersection information sent by the base station is received, and the UEm sends the RS in the time intersection or in a subset of the time intersection, thereby avoiding the interference generated by the UE in each cell on a scheduled UEm when an eNB schedules the UEm.

Further, on the basis of the embodiment shown in FIG. 5, the method further includes:

receiving intersection information of a total sounding bandwidth sent by a base station, where the total sounding bandwidth intersection information is the total sounding bandwidth intersection information acquired by the base station according to the total sounding bandwidth allocated by each cell providing services for the UEm for a UE to send a reference signal; and
sending an RS in the total sounding bandwidth intersection or in a subset of the total sounding bandwidth intersection. Optionally, the RS here may specifically refer to an SRS.

FIG. 6 is a schematic structure diagram of a a device for configuring a reference signal of the present invention. As shown in FIG. 6, this device includes: a first acquiring module 61, a second acquiring module 62, and a first sending module 63.

The first acquiring module 61 acquires group number information of a reference signal allocated for a user equipment UE respectively by each cell; the second acquiring module 62 acquires, according to the group number information acquired by the first acquiring module 61, group offset information of a reference signal of a user equipment UEm served by at least two cells at the same time in the UE, where the group offset information is used to update the group number information of the reference signal of the UEm; the first sending module 63 sends the group offset information acquired by the second acquiring module 62 to the UEm, so that the UEm acquires new group number information according to the allocated group number information of the reference signal and the group offset information, and sends a reference signal according to the new group number information.

In the device for configuring a reference signal, the first acquiring module 61 acquires group number information of an RS allocated for a UE respectively by each cel; the second acquiring module 62 acquires group offset information of the RS in the UE according to the group number information; the first sending module 63 sends the group offset information to the UEm, so that the UEm acquires new group number information according to the allocated group number information of the RS and the group offset information, and sends an RS according to the new group number information, thereby avoiding the interference generated by the UE in each cell on a scheduled UEm when an eNB schedules the UEm.

Further, on the basis of the embodiment shown in FIG. 6, this device may further include: a first configuring module and/or a second configuring module. The first configuring module is configured to configure an emission parameter of the reference signal of the UE under each cell, so that the UEm and the UE that only is served by a primary cell of the UEm send the reference signals at different time points; or, the second configuring module is configured to configure an emission parameter of the reference signal of the UE under each cell, so that the UEm and the UE that only is served by a primary cell of the UEm send the reference signals at different combs.

Further, on the basis of the embodiment shown in FIG. 6, this embodiment may further include: a third acquiring module and a second sending module. The third acquiring module is configured to acquire sending time allocated by each cell providing services for the UEm for the UE to send the reference signal, and acquire time intersection information of the allocated sending time; and the second sending module, configured to send the time intersection information to the UEm, so that the UEm sends the reference signal in the time intersection or in a subset of the time intersection.

Further, on the basis of the device shown in FIG. 6, this device may further include: a fourth acquiring module and a third sending module. The fourth acquiring module is configured to acquire a total sounding bandwidth allocated by each cell providing services for the UEm for the UE to send the reference signal, and acquire total sounding bandwidth intersection information of the allocated total sounding bandwidth; and the third sending module, configured to send the intersection information of the total sounding bandwidth to the UEm, so that the UEm sends the reference signal in the total sounding bandwidth intersection or a subset of the total sounding bandwidth intersection. Optionally, the RS here may specifically refer to an SRS.

Further, on the basis of the device shown in FIG. 6, this device may further include: a sharing module. The sharing module is configured to, when each cell is respectively controlled by a different evolved Node B eNB, enable the different eNBs to share emission parameters of reference signals allocated by the respective cells, where the emission parameter of the reference signal at least comprises the allocated group number information, or the group offset information of the reference signal of the UEm.

FIG. 7 is a schematic structure diagram of another a device for configuring a reference signal. As shown in FIG. 7, this device includes: a fifth acquiring module 71 and a fourth sending module 72.

The fifth acquiring module 71 acquires sending time allocated by each serving cell of a user equipment UEm served by at least two cells at the same time for a UE to send a reference signal, and acquires time intersection information of the allocated sending time; and the fourth sending module 72 sends the time intersection information acquired by the fifth acquiring module 71 to the UEm, so that the UEm sends the reference signal in the time intersection or in a subset of the time intersection.

In the device for configuring the reference signal provided in the embodiment of the present invention, the fifth acquiring module 71 acquires the sending time allocated by each serving cell for the UE to send the RS, and acquires the time intersection information of the allocated sending time, so that the UEm sends the RS in the time intersection or in a subset of the time intersection, thereby avoiding the interference generated by the UE in each cell on a scheduled UEm when an eNB schedules the UEm.

Further, on the basis of FIG. 7, this device may further include: a sixth acquiring module and a fifth sending module. The second acquiring module is configured to acquire a total sounding bandwidth allocated by each cell providing services for the UEm for the UE to send the reference signal, and acquire total sounding bandwidth intersection information of the allocated total sounding bandwidth; and the second sending module, configured to send the intersection information of the total sounding bandwidth to the UEm, so that the UEm sends the reference signal in the total sounding bandwidth intersection or a subset of the total sounding bandwidth intersection. Optionally, the RS here may specifically refer to an SRS.

FIG. 8 is a schematic structure diagram of an embodiment of a user equipment of the present invention. As shown in FIG. 8, this embodiment includes: a first receiving module 81, a seventh acquiring module 82, and a sixth sending module 83.

The first receiving module 81 receives group offset information of a reference signal allocated by a base station; the seventh acquiring module 82 acquires new group number information according to the group offset information received by the first receiving module 81 and the allocated group number information of the reference signal; and the sixth sending module 83 sends a reference signal according to the new group number information acquired by the seventh acquiring module 82.

In the user equipment provided in the embodiment of the present invention, the first receiving module 81 receives the group offset information of the RS allocated by the base station; the seventh acquiring module 82 acquires new group number information according to the group offset information and the allocated group number information of the RS; and the sixth sending module 83 sends an RS according to the new group number information, thereby avoiding the interference generated by the UE in each cell on a scheduled UEm when an eNB schedules the UEm.

Further, on the basis of the embodiment shown in FIG. 8, the seventh acquiring module 82 further include: a first acquiring unit, and/or a second acquiring unit, and/or a third acquiring unit.

The group offset information is group offset enabling information, the second acquiring unit is configured to, after receiving the group offset enabling information, acquire new group number information according to a sum of or a difference between the allocated group number information of the reference signal and a preset group offset, so that the new group number information is the same as group number information of another user equipment UEm served by at least two cells at the same time.

On the basis of the embodiment shown in FIG. 8, the sixth sending module 82 may further include: a first sending unit, and/or a second sending unit. The first sending unit is configured to send the reference signal at a time point different from a UE only served by a primary cell thereof according to a configured emission parameter of the reference signal; and the second sending unit is configured to send the reference signal at a comb different from a UE only served by a primary cell thereof according to a configured emission parameter of the reference signal.

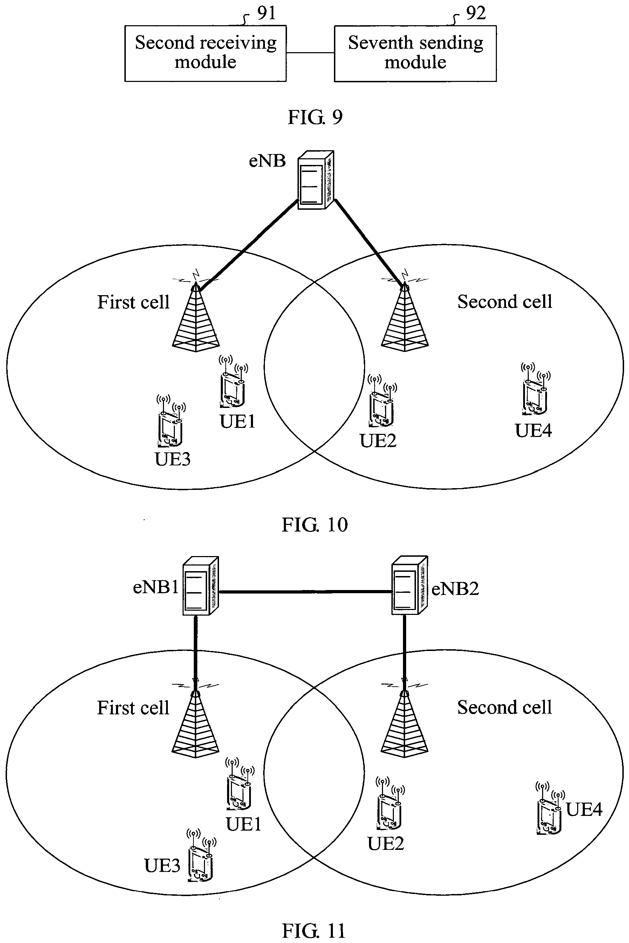

FIG. 9 is a schematic structure diagram of another example of a user equipment. As shown in FIG. 9, this includes: a second receiving module 91, and a seventh sending module 92.

The second receiving module 91 receives time intersection information sent by a base station, where the time intersection information is time intersection information acquired by the base station according to sending time allocated by each serving cell of a user equipment UEm served by at least two cells at the same time for sending a reference signal to a UE; and the seventh sending module 92 sends a reference signal in the time intersection or in a subset of the time intersection received by the second receiving module 91.

In the user equipment, the second receiving module 91 receives the time intersection information sent by the base station, and the seventh sending module 92 sends the RS in the time intersection or in a subset of the time intersection, thereby avoiding the interference generated by the UE in each cell on a scheduled UEm when an eNB schedules the UEm.

Further, on the basis of FIG. 9, this UE may further include: a third receiving module and an eighth sending module. The third receiving module is configured to receive intersection information of total sounding bandwidth sent by a base station, where the total sounding bandwidth intersection information is total sounding bandwidth intersection information acquired by the base station according to the total sounding bandwidth allocated by each cell providing services for the UEm for a UE to send a reference signal; and the eighth sending module is configured to send a reference signal in the total sounding bandwidth intersection or in a subset of the total sounding bandwidth intersection. Optionally, the RS here may specifically refer to an SRS.

FIG. 10 is a schematic structure diagram of a system for configuring a reference signal. As shown in FIG. 10, an eNB connects to a first cell and a second cell in a wired manner, and controls UEs in the first cell and the second cell. A UE1 is a UEm in the first cell that can be served by the first cell and the second cell; a UE2 is a UEm in the second cell that can be served by the first cell and the second cell; a UE3 is a common UE that can only be served by the first cell; and a UE4 is a common UE that can only be served by the second cell.

The eNB control resource information of RSs of the first cell and the second cell at the same time, and therefore, RSs between the UE1, UE2, and other UEs (the UE3, UE4) may be coordinated directly through configuring parameters. Specifically, the foregoing description may be implemented through the following manner. The eNB acquires group number information of RSs of the UE (UE1) in the first cell and the UE (UE2) in the second cell, and acquires group offset information of the RS of the UEms (UE1, UE2) in the first cell and the second cell according to the group number information, so that the group number information of the RSs of the UE1 in the first cell and the UE2 in the second cell are the same as new group number information formed by the group offset information. The eNB sends the new group number information to the UE1 in the first cell and the UE2 in the second cell, so that the UE1 in the first cell and the UE2 in the second cell send RSs according to the new group number information.

The UE1 and the UE2 that are served by the first cell and the second cell have the same new group number information, so that the UE1 and the UE2 that are served by the first cell and the second cell send the RSs according to the same new group number information, thereby avoiding the interference generated by the UE2 in the second cell on the scheduled UE1 when the eNB schedules the UE1 in the first cell.

FIG. 11 is a schematic structure diagram of another system for configuring a reference signal. As shown in FIG. 11, an eNB1 and an eNB2 are connected through a signaling interface between eNBs; the eNB1 is connected to a first cell in a wired manner; the eNB2 is connected to a second cell in a wired manner; the eNB1 controls UEs (UE1, UE3) in the first cell; and the eNB2 controls UEs (UE2, UE4) in the second cell. The UE1 is a UEm in the first cell that can be served by the first cell and the second cell; the UE2 is a UEm in the second cell that can be served by the first cell and the second cell; the UE3 is a common UE in the first cell; and the UE4 is a common UE in the second cell.

The eNB1 controls resource information of RSs of the UEs in the first cell; the eNB2 controls resource information of RSs of the UEs in the second cell; and the eNB1 and the eNB2 are independent with each other, so the embodiment of the present invention enables the resource information of the RSs of the UEms to be orthogonal, thereby avoiding the interference generated between the RS of the UEm in the first cell under the eNB1 and the RS of the UEm in the second cell under the eNB2.

Specifically, the eNB1 acquires, through an interface, first configuration information of the RS of the UEm (UE2) in the second cell under the eNB2, acquires second configuration information of the RS of the UEm (UE1) in the first cell under the eNB1, and sends the second configuration information to the UE1 under the eNB1, so that the UE1 sends the RS to the eNB2 according to the second configuration information. The first configuration information is orthogonal to the second configuration information, so the UE1 may avoid the interference of the UEs (UE2, UE4) of the eNB2 when sending the RS to the eNB2.

Further, the first configuration information and the second configuration information may specifically be: sending time information of the RS, sending bandwidth information of the RS (may specifically be: initial frequency of a sending bandwidth, a sequence length, a comb and/or total sounding bandwidth), information of a sequence where the RS locates (including group number information, group offset information, group number information and/or circulation shift of UE).

The embodiments of the present invention may specifically be applied in a CoMP system, and in the CoMP system, specific parameters in the cells related to the RSs in multiple cells are configured cooperatively, so that when the eNB schedules the UE, in the serving cells of the UEm, the RS used by the UEm is orthogonal to the RSs of other UEms and common UEs, thereby avoiding the interference between cells.

Persons of ordinary skill in the art may understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

**Claims**

1.  A method for configuring a reference signal of a user equipment being served by at least two cells, UEm, at the same time, comprising:

    acquiring (201), by a base station, group number information of a reference signal, RS, allocated for the UEm respectively by each of the at least two cells, wherein group number information refers to a group number of a group where a sequence adopted by a reference signal locates;
    acquiring (202), by the base station, according to the group number information allocated by each of the at least two cells, a respective group offset of the reference signal of the UEm, wherein the group offset is used to update the group number information of the reference signal of the UEm in the cell;
    presetting, by the base station to the UEm the group offset in each cell through downlink signaling; and

    sending (203), by the base station, a group offset enabling information to the UEm, to instruct the UEm to acquire new group number information according to a sum of or a difference between the allocated group number information of the RS in the cell and the preset group offset, so that the new group number information of the UEm is the same as new group number information of another UEm being served by the at least two cells; wherein the UEm and the another UEm are located in different cells among the least two cells.

2.  The method according to claim 1, further comprising:

    acquiring (301), by the base station, sending time allocated, by each cell providing services for the UEm, for the UE to send the reference signal, and acquiring time intersection information of the allocated sending time; and
    sending (302), by the base station, the time intersection information or information of one or more subsets of the time intersection to the UEm, so that the UEm sends the reference signal in the time intersection or in a subset of the time intersection.

3.  The method according to claim 1, further comprising: configuring, by the base station, an emission parameter of the reference signal of the UE under each cell, so that the UEm and the UE that only is served by a primary cell of the UEm send the reference signals at different time points.

4.  The method according to claim 1, when each cell is respectively controlled by a different evolved Node B, eNB, further comprising: sharing, by the different eNBs, emission parameters of reference signals allocated by the respective cells, wherein the emission parameter of the reference signal at least comprises the allocated group number information, or the group offset of the reference signal of the UEm.

5.  The method according to claim 1, wherein the reference signal comprises: a signal modulated through a sequence.

6.  A method for configuring a reference signal, comprising:

    receiving, by a user equipment UEm served by at least two cells at the same time, a preset group offset in each cell through downlink signaling;
    receiving (401), by the UEm, a group offset enabling information, wherein the group offset enabling information instructs the UEm to acquire new group number information according to a sum of or a difference between allocated group number information of the RS of the UEm in the cell and the preset group offset, so that the new group number information of the UEm is the same as new group number information of another UEm being served by the least two cells; wherein the UEm and the another UEm are located in different cells among the least two cells; acquiring (402), by the UEm, new group number information of the UEm according to a sum or a difference between the allocated group number information of the RS in the cell and the presetgroup offset so that the new group number information of the UEm is the same as new group number information of another UEm served by the at least two cells at the same time; wherein the UEm and the another UEm are located in different cells among at least two cells, and where the allocated group number information is a group number of a group where a sequence adopted by a reference signal locates and the new group number information is a group number of a group where a sequence adopted by a reference signal locates; and sending (403), by the UEm, the reference signal of the UEm according to the new group number information of the UEm.

7. A device for configuring a reference signal, wherein the device is associated with a base station and comprises:

   a first acquiring module (61), configured to acquire group number information of a reference signal, RS, allocated for a user equipment, UE, respectively by each cell of at least two cells, wherein the group number information of a reference signal is a group number of a group where a sequence adopted by the reference signal locates;
   a second acquiring module (62), configured to acquire, according to the group number information allocated by each of the at least two cells, a respective group offset of a reference signal of a user equipment, UEm, served by the at least two cells at the same time where the group offset is used to update the group number information of the reference signal of the UEm in the cell; and
   a first sending module (63), configured to preset the group offset in each cell through downlink signaling; and to send a group offset enabling information to the UEm, to instruct the UEm to acquire new group number information of the UEm according to the allocated group number information of the reference signal of the UEm and the group offset, and to send the reference signal of the UEm according to a sum of or a difference between the allocated group number information of the RS in the cell and the preset group offset, so that the new group number information of the UEm is the same as new group number information of another UEm served by the at least two cells at the same time; wherein the UEm and the another UEm are located in different cells among the least two cells.

8. The device according to claim 7, further comprising:

   a third acquiring module, configured to acquire sending time allocated, by each cell providing services for the UEm, for the UE to send the reference signal, and acquire time intersection information of the allocated sending time; and
   a second sending module, configured to send the time intersection information or information of one or more subsets of the time intersection to the UEm, so that the UEm sends the reference signal in the time intersection or in a subset of the time intersection.

9. The device according to claim 7, further comprising:
   a first configuring module, configured to configure an emission parameter of the reference signal of the UEm, so that the UEm sends the reference signal at a time point different from a UE only served by a primary cell of the UEm according to the configured emission parameter of the reference signal.

10. The device according to any one of claims 7 to 9, further comprising: a sharing module; wherein the sharing module is configured to, when each cell is respectively controlled by a different evolved Node B eNB, enable the different eNBs to share emission parameters of reference signals allocated by the respective cells, wherein the emission parameter of the reference signal at least comprises the allocated group number information, or the group offset of the reference signal of the UEm.

11. A user equipment UEm served by at least two cells at the same time, comprising:

   a first receiving module (81), configured to receive a preset group offset in each cell through downlink signaling, and to receive a group offset enabling information, wherein the group offset enabling information instructs the UEm to acquire new group number information according to a sum of or a difference between allocated group number information of the RS of the UEm in the cell and the preset group offset, so that the new group number information of the UEm is the same as new group number information of another UEm being served by the least two cells; wherein the UEm and the another UEm are located in different cells among the least two cells;

a seventh acquiring module (82), configured to acquire new group number information of the UEm according to a sum or a difference between the allocated group number information of the RS in the cell and the preset group offset so that the new group number information of the UEm is the same as new group number information of another UEm served by the at least two cells at the same time; wherein the UEm and the another UEm are located in different cells among at least two cells, and where the allocated group number information is a group number of a group where a sequence adopted by a reference signal locates and the new group number information is a group number of a group where a sequence adopted by a reference signal locates; and

a sixth sending module (83), configured to send the reference signal of the UEm according to the new group number information of the UEm.

12. A computer program product, comprising computer program code, which, when executed by a computer unit associated with a base station, will cause the base station to perform all the steps of a method according to any one of claims 1 to 5, and when executed by a computer unit associated with a user terminal, will cause the user terminal to perform all the steps of a method according to claim 6.

**Patentansprüche**

1. Verfahren zum Konfigurieren eines Referenzsignals eines Benutzergeräts, UEm, das von mindestens zwei Zellen gleichzeitig bedient wird, umfassend:

Erfassen (201), durch eine Basisstation, von Gruppennummerninformationen eines Referenzsignals, RS, die für das jeweilige UEm durch jede der mindestens zwei Zellen zugewiesen werden, wobei sich die Gruppennummerninformationen auf eine Gruppennummer einer Gruppe beziehen, in der sich eine Sequenz befindet, die von einem Referenzsignal übernommen wurde;

Erfassen (202), durch die Basisstation, gemäß den Gruppennummerninformationen, die von den mindestens zwei Zellen zugewiesen wurden, eines jeweiligen Gruppenoffsets des Referenzsignals des UEm, wobei der Gruppenoffset verwendet wird, um die Gruppennummerninformationen des Referenzsignals des UEm in der Zelle zu aktualisieren;

Voreinstellen, durch die Basisstation für das UEm, des Gruppenoffsets in jeder Zelle durch eine Downlink-Signalisierung; und

Senden (203) von Informationen einer Gruppenoffsetaktivierung von der Basisstation zu dem UEm, um das UEm anzuweisen, neue Gruppennummerninformationen gemäß einer Summe von oder einer Differenz zwischen den zugewiesenen Gruppennummerninformationen des RS in der Zelle und dem voreingestellten Gruppenoffset zu erfassen, sodass die neuen Gruppennummerninformationen des UEm die gleichen sind wie neue Gruppennummerninformationen eines anderen UEm, das von den mindestens zwei Zellen bedient wird; wobei sich das UEm und das andere UEm in verschiedenen Zellen von den mindestens zwei Zellen befinden.

2. Verfahren nach Anspruch 1, das außerdem umfasst:

Erfassen (301), durch die Basisstation, einer Sendezeit, die durch jede Zelle zugewiesen wird, die Dienste für das UEm bereitstellt, für das UE, um das Referenzsignal zu senden, und Erfassen von Zeitüberschneidungsinformationen der zugewiesenen Sendezeit; und Senden (302) der Zeitüberschneidungsinformationen oder von Informationen über eine oder mehrere Teilgruppen der Zeitüberschneidung von der Basisstation zu dem UEm, sodass das UEm das Referenzsignal in der Zeitüberschneidung oder in einer Teilgruppe der Zeitüberschneidung sendet.

3. Verfahren nach Anspruch 1, das außerdem umfasst:
Konfigurieren, durch die Basisstation, eines Emissionsparameters des Referenzsignals des UE unter jeder Zelle, sodass das UEm und das UE, das nur von einer Primärzelle des UEm bedient wird, die Referenzsignale zu unterschiedlichen Zeitpunkten senden.

4. Verfahren nach Anspruch 1, das, wenn jede Zelle jeweils durch einen anderen erweiterten B-Knoten (evolved Node B, eNB) gesteuert wird, außerdem umfasst:
gemeinsames Nutzen, durch die verschiedenen eNBs, von Emissionsparametern der Referenzsignale, die von den jeweiligen Zellen zugewiesen wurden, wobei der Emissionsparameter des Referenzsignals mindestens die zugewiesenen Gruppennummerninformationen oder den Gruppenoffset des Referenzsignals des UEm umfasst.

5. Verfahren nach Anspruch 1, wobei das Referenzsignal umfasst: ein Signal, das durch eine Sequenz moduliert wurde.

**6.** Verfahren zum Konfigurieren eines Referenzsignals, umfassend:

Empfangen, in einem Benutzergerät UEm, das von mindestens zwei Zellen gleichzeitig bedient wird, eines voreingestellten Gruppenoffsets in jeder Zelle durch eine Downlink-Signalisierung; Empfangen (401), in dem UEm, von Informationen einer Gruppenoffsetaktivierung, wobei die Informationen einer Gruppenoffsetaktivierung das UEm anweisen, neue Gruppennummerninformationen gemäß einer Summe von oder einer Differenz zwischen zugewiesenen Gruppennummerninformationen des RS des UEm in der Zelle und dem voreingestellten Gruppenoffset zu erfassen, sodass die neuen Gruppennummerninformationen des UEm die gleichen sind wie neue Gruppennummerninformationen eines anderen UEm, das von den mindestens zwei Zellen bedient wird; wobei sich das UEm und das andere UEm in verschiedenen Zellen von den mindestens zwei Zellen befinden; Erfassen (402), durch das UEm, von neuen Gruppennummerninformationen des UEm gemäß einer Summe von oder einer Differenz zwischen den zugewiesenen Gruppennummerninformationen des RS in der Zelle und dem voreingestellten Gruppenoffset, sodass die neuen Gruppennummerninformationen des UEm die gleichen sind wie neue Gruppennummerninformationen eines anderen UEm, das von den mindestens zwei Zellen gleichzeitig bedient wird; wobei sich das UEm und das andere UEm in verschiedenen Zellen von den mindestens zwei Zellen befinden, und wobei die zugewiesenen Gruppennummerninformationen eine Gruppennummer einer Gruppe sind, in der sich eine Sequenz befindet, die von einem Referenzsignal übernommen wurde, und wobei die neuen Gruppennummerninformationen eine Gruppennummer einer Gruppe sind, in der sich eine Sequenz befindet, die von einem Referenzsignal übernommen wurde; und Senden (403), durch das UEm, des Referenzsignals des UEm gemäß den neuen Gruppennummerninformationen des UEm.

**7.** Vorrichtung zum Konfigurieren eines Referenzsignals, wobei die Vorrichtung mit einer Basisstation assoziiert ist und umfasst:

ein erstes Erfassungsmodul (61), das konfiguriert ist zum Erfassen von Gruppennummerninformationen eines Referenzsignals, RS, die jeweils für ein Benutzergerät, UE, durch jede Zelle der mindestens zwei Zellen zugewiesen werden, wobei die Gruppennummerninformationen eines Referenzsignals eine Gruppennummer einer Gruppe sind, in der sich eine Sequenz befindet, die von einem Referenzsignal übernommen wurde;
ein zweites Erfassungsmodul (62), das konfiguriert ist zum Erfassen, gemäß den Gruppennummerninformationen, die durch jede der mindestens zwei Zellen zugewiesen wurden, eines jeweiligen Gruppenoffsets eines Referenzsignals eines Benutzergeräts, UEm, das von den mindestens zwei Zellen gleichzeitig bedient wird, wobei der Gruppenoffset verwendet wird, um die Gruppennummerninformationen des Referenzsignals des UEm in der Zelle zu aktualisieren; und
ein erstes Sendemodul (63), das konfiguriert ist zum Voreinstellen des Gruppenoffsets in jeder Zelle durch eine Downlink-Signalisierung; und zum Senden von Informationen einer Gruppenoffsetaktivierung zu dem UEm, um das UEm anzuweisen, neue Gruppennummerninformationen des UEm gemäß den zugewiesenen Gruppennummerninformationen des Referenzsignals des UEm und gemäß dem Gruppenoffset zu erfassen; und zum Senden des Referenzsignals des UEm gemäß einer Summe von oder einer Differenz zwischen den zugewiesenen Gruppennummerninformationen des RS in der Zelle und dem voreingestellten Gruppenoffset, sodass die neuen Gruppennummerninformationen des UEm die gleichen sind wie neue Gruppennummerninformationen eines anderen UEm, das von den mindestens zwei Zellen gleichzeitig bedient wird; wobei sich das UEm und das andere UEm in verschiedenen Zellen von den mindestens zwei Zellen befinden.

**8.** Vorrichtung nach Anspruch 7, die außerdem umfasst:

ein drittes Erfassungsmodul, das konfiguriert ist zum Erfassen einer Sendezeit, die durch jede Zelle zugewiesen wird, die Dienste für das UEm bereitstellt, für das UE, um das Referenzsignal zu senden, und zum Erfassen von Zeitüberschneidungsinformationen der zugewiesenen Sendezeit; und
ein zweites Sendemodul, das konfiguriert ist zum Senden der Zeitüberschneidungsinformationen oder von Informationen über eine oder mehrere Teilgruppen der Zeitüberschneidung zu dem UEm, sodass das UEm das Referenzsignal in der Zeitüberschneidung oder in einer Teilgruppe der Zeitüberschneidung sendet.

**9.** Vorrichtung nach Anspruch 7, die außerdem umfasst:

ein erstes Konfigurationsmodul, das konfiguriert ist zum Konfigurieren eines Emissionsparameters des Referenzsignals des UEm, sodass das UEm das Referenzsignal zu einem Zeitpunkt sendet, der verschieden ist von einem UE, das nur von einer Primärzelle des UEm gemäß dem konfigurierten Emissionsparameter des Referenzsignals bedient wird.

10. Vorrichtung nach einem der Ansprüche 7 bis 9, die außerdem umfasst:

ein Mitbenutzungsmodul;
wobei das Mitbenutzungsmodul konfiguriert ist zum, wenn jede Zelle jeweils durch einen anderen erweiterten B-Knoten (evolved Node B, eNB) gesteuert wird, Aktivieren der verschiedenen eNBs, um die Emissionsparameter der Referenzsignale gemeinsam zu nutzen, die von den jeweiligen Zellen zugewiesen wurden, wobei der Emissionsparameter des Referenzsignals mindestens die zugewiesenen Gruppennummerninformationen oder den Gruppenoffset des Referenzsignals des UEm umfasst.

11. Benutzergerät, UEm, das von mindestens zwei Zellen gleichzeitig bedient wird, umfassend:

ein erstes Empfangsmodul (81), das konfiguriert ist zum Empfangen eines voreingestellten Gruppenoffsets in jeder Zelle durch eine Downlink-Signalisierung;
und zum Empfangen von Informationen einer Gruppenoffsetaktivierung, wobei die Informationen einer Gruppenoffsetaktivierung das UEm anweisen, neue Gruppennummerninformationen gemäß einer Summe von oder einer Differenz zwischen zugewiesenen Gruppennummerninformationen des RS des UEm in der Zelle und dem voreingestellten Gruppenoffset zu erfassen, sodass die neuen Gruppennummerninformationen des UEm die gleichen sind wie neue Gruppennummerninformationen eines anderen UEm, das von den mindestens zwei Zellen bedient wird, wobei sich das UEm und das andere UEm in verschiedenen Zellen von den mindestens zwei Zellen befinden;
ein siebtes Erfassungsmodul (82), das konfiguriert ist zum Erfassen von neuen Gruppennummerninformationen des UEm gemäß einer Summe von oder einer Differenz zwischen den zugewiesenen Gruppennummerninformationen des RS in der Zelle und dem voreingestellten Gruppenoffset, sodass die neuen Gruppennummerninformationen des UEm die gleichen sind wie neue Gruppennummerninformationen eines anderen UEm, das von den mindestens zwei Zellen gleichzeitig bedient wird; wobei sich das UEm und das andere UEm in verschiedenen Zellen von den mindestens zwei Zellen befinden, und wobei die zugewiesenen Gruppennummerninformationen eine Gruppennummer einer Gruppe sind, in der sich eine Sequenz befindet, die von einem Referenzsignal übernommen wurde, und wobei die neuen Gruppennummerninformationen eine Gruppennummer einer Gruppe sind, in der sich eine Sequenz befindet, die von einem Referenzsignal übernommen wurde; und
ein sechstes Sendemodul (83), das konfiguriert ist zum Senden des Referenzsignals des UEm gemäß den neuen Gruppennummerninformationen des UEm.

12. Computerprogrammprodukt, das einen Computerprogrammcode umfasst, der, wenn er von einer Computereinheit ausgeführt wird, die mit einer Basisstation assoziiert ist, die Basisstation veranlasst wird, alle Schritte eines Verfahrens nach einem der Ansprüche 1 bis 5 durchzuführen, und wenn er von einer Computereinheit ausgeführt wird, die mit einem Benutzerendgerät assoziiert ist, das Benutzerendgerät veranlasst wird, alle Schritte eines Verfahrens nach Anspruch 6 durchzuführen.

**Revendications**

1. Procédé de configuration d'un signal de référence d'un équipement utilisateurdesservi par au moins deux cellules, UEm, en même temps, comprenant :

l'acquisition (201), par une station de base, d'une information de numéro de groupe d'un signal de référence, RS, allouée pour l'UEm respectivement par chacune des au moins deux cellules, dans lequel l'information de numéro de groupe se réfère à un numéro de groupe d'un groupe dans lequel une séquence adoptée par un signal de référence est localisée ;
l'acquisition (202), par la station de base, conformément à l'information de numéro de groupe allouée par chacune des au moins deux cellules, d'un décalage de groupe respectif du signal de référence de l'UEm, dans lequel le décalage de groupe est utilisé pour mettre à jour l'information de numéro de groupe du signal de référence de l'UEm dans la cellule ;
la prédéfinition, par la station de base pour l'UEm, du décalage de groupe dans chaque cellule par l'intermédiaire d'une signalisation de liaison descendante ; et
l'envoi (203), par la station de base, d'une information de validation de décalage de groupe à l'UEm, pour demander à l'UEm d'acquérir une nouvelle information de numéro de groupe conformément à une somme de l'information de numéro de groupe allouée du RS dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules ; dans lequel l'UEm et l'autre UEm sont localisés dans des cellules différentes parmi les au moins deux cellules.

2. Procédé selon la revendication 1, comprenant en outre :

l'acquisition (301), par la station de base, d'un temps d'envoi alloué par chaque cellule fournissant des services pour l'UEm, pour que l'UE envoie le signal de référence, et l'acquisition d'une information d'intersection de temps du temps d'envoi alloué ; et
l'envoi (302), par la station de base, de l'information d'intersection de temps ou d'une information d'un ou de plusieurs sous-jeux de l'intersection de temps à l'UEm, de telle sorte que l'UEm envoie le signal de référence dans l'intersection de temps ou dans un sous-jeu de l'intersection de temps.

3. Procédé selon la revendication 1, comprenant en outre :
la configuration, par la station de base, d'un paramètre d'émission du signal de référence de l'UE sous chaque cellule, de telle sorte que l'UEm et l'UE qui est seulement desservi par une cellule primaire de l'UEm envoient les signaux de référence à des points temporels différents.

4. Procédé selon la revendication 1, dans lequel chaque cellule est respectivement commandée par un noeud B évolué, eNB, différent, comprenant en outre : le partage, par les eNB différents, de paramètres d'émission de signaux de référence alloués par les cellules respectives, dans lequel le paramètre d'émission du signal de référence comprend au moins l'information de numéro de groupe allouée ou le décalage de groupe du signal de référence de l'UEm.

5. Procédé selon la revendication 1, dans lequel le signal de référence comprend : un signal modulé par l'intermédiaire d'une séquence.

6. Procédé de configuration d'un signal de référence, comprenant :

la réception, par un équipement utilisateur UEm desservi par au moins deux cellules en même temps, d'un décalage de groupe prédéfini dans chaque cellule par l'intermédiaire d'une signalisation de liaison descendante ;
la réception (401), par l'UEm, d'une information de validation de décalage de groupe, dans lequel l'information de validation de décalage de groupe demande à l'UEm d'acquérir une nouvelle information de numéro de groupe conformément à une somme de l'information de numéro de groupe allouée du RS de l'UEm dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules ; dans lequel l'UEm et l'autre UEm sont localisés dans des cellules différentes parmi les au moins deux cellules ;
l'acquisition (402), par l'UEm, d'une nouvelle information de numéro de groupe de l'UEm conformément à une somme de l'information de numéro de groupe allouée du RS dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules ; dans lequel l'UEm et l'autre UEm sont localisés dans des cellules différentes parmi les au moins deux cellules, et dans lequel l'information de numéro de groupe allouée est un numéro de groupe d'un groupe dans lequel une séquence adoptée par un signal de référence est localisée et la nouvelle information de numéro de groupe est un numéro de groupe d'un groupe dans lequel une séquence adoptée par un signal de référence est localisée ; et
l'envoi (403), par l'UEm, du signal de référence de l'UEm conformément à la nouvelle information de numéro de groupe de l'UEm.

7. Dispositif de configuration d'un signal de référence, dans lequel le dispositif est associé à une station de base et comprend :

un premier module d'acquisition (61), configuré pour acquérir une information de numéro de groupe d'un signal de référence, RS, allouée pour un équipement utilisateur, UE, respectivement par chaque cellule d'au moins deux cellules, dans lequel l'information de numéro de groupe d'un signal de référence est un numéro de groupe d'un groupe dans lequel une séquence adoptée par le signal de référence est localisée ;
un deuxième module d'acquisition (62), configuré pour acquérir, conformément à l'information de numéro de groupe allouée par chacune des au moins deux cellules, un décalage de groupe respectif d'un signal de référence d'un équipement utilisateur, UEm, desservi par les au moins deux cellules en même temps, dans lequel le décalage de groupe est utilisé pour mettre à jour l'information de numéro de groupe du signal de référence de l'UEm dans la cellule ; et

un premier module d'envoi (63), configuré pour prédéfinir le décalage de groupe dans chaque cellule par l'intermédiaire d'une signalisation de liaison descendante ; et pour envoyer une information de validation de décalage de groupe à l'UEm, pour demander à l'UEm d'acquérir une nouvelle information de numéro de groupe de l'UEm conformément à l'information de numéro de groupe allouée du signal de référence de l'UEm et au décalage de groupe, et pour envoyer le signal de référence de l'UEm conformément à une somme de l'information de numéro de groupe allouée du RS dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules en même temps ; dans lequel l'UEm et l'autre UEm sont localisés dans des cellules différentes parmi les au moins deux cellules.

**8.** Dispositif selon la revendication 7, comprenant en outre :

un troisième module d'acquisition, configuré pour acquérir un temps d'envoi alloué, par chaque cellule fournissant des services pour l'UEm, pour que l'UE envoie le signal de référence, et pour acquérir une information d'intersection de temps du temps d'envoi alloué ; et
un second module d'envoi, configuré pour envoyer l'information d'intersection de temps ou une information d'un ou de plusieurs sous-jeux de l'intersection de temps à l'UEm, de telle sorte que l'UEm envoie le signal de référence dans l'intersection de temps ou dans un sous-jeu de l'intersection de temps.

**9.** Dispositif selon la revendication 7, comprenant en outre :
un premier module de configuration, configuré pour configurer un paramètre d'émission du signal de référence de l'UEm, de telle sorte que l'UEm envoie le signal de référence à un point temporel différent d'un UE seulement desservi par une cellule primaire de l'UEm conformément au paramètre d'émission configuré du signal de référence.

**10.** Dispositif selon l'une quelconque des revendications 7 à 9, comprenant en outre :
un module de partage ; dans lequel le module de partage est configuré pour, lorsque chaque cellule est respectivement commandée par un noeud B évolué, eNB, différent, valider les différents eNB pour partager des paramètres d'émission de signaux de référence alloués par les cellules respectives, dans lequel le paramètre d'émission du signal de référence comprend au moins l'information de numéro de groupe allouée ou le décalage de groupe du signal de référence de l'UEm.

**11.** Équipement utilisateur UEm desservi par au moins deux cellules en même temps, comprenant :

un premier module de réception (81), configuré pour recevoir un décalage de groupe prédéfini dans chaque cellule par l'intermédiaire d'une signalisation de liaison descendante et pour recevoir une information de validation de décalage de groupe, dans lequel l'information de validation de décalage de groupe demande à l'UEm d'acquérir une nouvelle information de numéro de groupe conformément à une somme de l'information de numéro de groupe allouée du RS de l'UEm dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules ; dans lequel l'UEm et l'autre UEm sont localisés dans des cellules différentes parmi les au moins deux cellules ;
un septième module d'acquisition (82), configuré pour acquérir une nouvelle information de numéro de groupe de l'UEm conformément à une somme de l'information de numéro de groupe allouée du RS dans la cellule et du décalage de groupe prédéfini ou conformément à leur différence, de telle sorte que la nouvelle information de numéro de groupe de l'UEm soit la même qu'une nouvelle information de numéro de groupe d'un autre UEm desservi par les au moins deux cellules en même temps ; dans lequel l'UEm et l'autre UEm sont localisés dans des cellules différentes parmi les au moins deux cellules, et dans lequel l'information de numéro de groupe allouée est un numéro de groupe d'un groupe dans lequel une séquence adoptée par un signal de référence est localisée et la nouvelle information de numéro de groupe est un numéro de groupe d'un groupe dans lequel une séquence adoptée par un signal de référence est localisée ; et
un sixième module d'envoi (83), configuré pour envoyer le signal de référence de l'UEm conformément à la nouvelle information de numéro de groupe de l'UEm.

**12.** Progiciel, comprenant un code de programme informatique qui, lorsqu'il est exécuté par une unité informatique associée à une station de base, aura pour effet que la station de base réalise toutes les étapes d'un procédé selon l'une quelconque des revendications 1 à 5, et qui, lorsqu'il est exécuté par une unité informatique associée à un terminal utilisateur, aura pour effet que le terminal utilisateur réalise toutes les étapes d'un procédé selon la revendication 6.

FIG. 1

201
Acquire group number information of an RS allocated for a user
equipment UE respectively by each cell

202
Acquire, according to the group number information, group offset
information of an RS of a user equipment UEm served by at least two
cells at the same time in the UE, where the group offset information
is used to update the group number information of the RS of the UEm

203
Send the group offset information to the UEm, so that the UEm
acquires new group number information according to the allocated
group number information of the RS and the group offset
information, and sends an RS according to the new group number
information

FIG. 2

301
Acquire sending time allocated by each serving cell of the UEm for
the UE to send an RS, and acquire time intersection information of
the allocated sending time

302
Send the time intersection information to the UEm, so that the UEm
sends the RS in the time intersection or in a subset of the time
intersection

FIG. 3

Receive group offset information of an RS allocated by a base station — 401

Acquire new group number information according to the group offset information and the allocated group number information of the RS — 402

Send an RS according to the new group number information — 403

FIG. 4

Receive time intersection information sent by a base station, where the time intersection information is time intersection information acquired by the base station according to sending time allocated by each serving cell of a UEm for a UE to send an RS — 501

Send an RS in the time intersection or in a subset of the time intersection — 502

FIG. 5

61 First acquiring module    62 Second acquiring module    63 First sending module

FIG. 6

71 Fifth acquiring module    72 Fourth sending module

FIG. 7

81 First receiving module    82 Seventh acquiring module    83 Sixth sending module

FIG. 8

91

92

| Second receiving module | | Seventh sending module |
| --- | --- | --- |

FIG. 9

eNB

First cell

Second cell

UE1

UE3

UE2

UE4

FIG. 10

eNB1

eNB2

First cell

Second cell

UE1

UE3

UE2

UE4

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Considerations on the Uplink Reference Signal for CoMP. *3GPP TSG RAN WG1, R1-091267*
- Uplink DM RS from CoMP viewpoint. *3GPP TSG RAN WG1, R1-091760*
- Discussion on PUCCH coordination for UL CoMP. *3GPP TSG RAN WG1, R1-091165*
- Uplink DM RS PUSCH Sequence-shift Pattern. *3GPP TSG RAN WG1, R1-082331*
- Analysis of SRS scheme for CoMP. *3GPP TSG RAN WG1, R1-092776*